# EUROPEAN PATENT APPLICATION

(11) **EP 3 150 462 A1**
(43) Date of publication of application: **05.04.2017**
(21) Application number: 14893273.4
(22) Date of filing: 30.12.2014
(51) Int. Cl.: B62B 7/08

(54) **COLLAPSIBLE STROLLER**

(30) Priority: 30.05.2014 CN 201410238519; 02.12.2014 CN 201410720565
(71) Applicant: Goodbaby Child Products Co., Ltd., Kunshan, Jiangsu 215331 (CN)
(72) Inventor: TAN, Taiping, Kunshan Jiangsu 215331 (CN)
(74) Representative: Cabinet Laurent & Charras
(86) International application number: PCT/CN2014/095510
(87) International publication number: WO 2015/180466

(57) **Abstract**

Disclosed is a folding stroller, comprising a stroller frame, a front wheel assembly (20) and a rear wheel assembly (30), and a locking mechanism provided on the stroller frame and used for locking the stroller frame, and the stroller frame comprises a front support (1), a rear support (2) and a seat rod (3); the front support (1), the rear support (2) and the seat rod (3) are connected with one another to form a triangular three-link mechanism; in the three connection relationships among the three components, two are rotatable connection, and the rest one is relative slidable connection by means of a slider (4), and the slider (4) is slidably arranged in the length direction of one of the two connected components and is in rotatable connection with the other component. The stroller can be conveniently folded, has a simple structure, and has good rigidity when unfolded.

## Description

### FIELD OF INVENTION

The present invention relates to a folding stroller.

### BACKGROUND OF THE INVENTION

At present, infant/ child strollers in the market are mainly two kinds, one is ordinary stroller, and the other is a portable folding stroller. Compared with the ordinary stroller, the folding stroller is convenient, very small when folded, suitable for using when going out, especially when traveling on vehicles such as buses, is very convenient.

In prior art, the frame of the folding stroller usually comprises a side bracket located on two sides, a bottom support and a rear support provided between the side brackets on the two sides, each side bracket comprising a front bracket, a push rod with the lower part rotatably connected with the upper end part of the front bracket, a rear bracket and a connecting rod, the upper end part of the rear bracket being rotatably connected with the push rod, the connecting rod being provided between the front bracket and the rear bracket, the front end part of the connecting rod being rotatably connected with the front bracket and the rear end part being rotatably connected with the rear bracket, and the connecting rod extending substantially horizontally. It requires multiple steps when folding an existing stroller, and "lift to fold" can not be achieved, and folding operation is not convenient enough, while in the existing strollers, the front bracket and the push rod are often connected by plastic pieces, and with the addition of its own characteristics of the strollers, the frame is prone to collapse inward under the weight-bearing condition, affecting the safety and comfort. In addition, the existing strollers must be provided with connecting rods to strengthen the rigidity of the frame, and have many rod pieces.

### SUMMARY OF THE INVENTION

The present invention is intended to provide a folding stroller of simple structure and convenient for fold operation.

To solve the above problems, the present invention employs the following technical schemes: A folding stroller, comprises a stroller frame with a unfolded state and a folded state, a front wheel assembly and a rear wheel assembly, and a locking mechanism provided on the stroller frame and used for locking the stroller frame, the stroller frame comprising a front support at the bottom of which the front wheel assembly is provided, a rear support at the bottom of which the rear wheel assembly is provided, and a seat rod extending along a front-rear direction; the front support, the rear support and the seat rod are connected with one another to form a triangular three-link mechanism, and in the three connection relationships among the three components, two are rotatable connection, and the rest one is relative slidable connection by means of a slider, the slider being slidably arranged in the length direction of one of the two slidably connected components and being in rotatable connection with the other component of the two slidably connected components.

In a specific embodiment, the stroller frame comprises side supports on two sides, and the side support on each side respectively comprises the front support, the rear support and the seat rod, and the stroller frame further comprises a support frame connected between the side supports on the two sides and capable of closing up and being folded in a transverse direction.

Further, the locking mechanism is to lock the slider and the component slidably provided with the slider together, and unlocking elements are respectively provided on the sliders of the side supports on the two sides for unlocking the locking mechanism, two ends of a folding operating element are connected with the unlocking elements on two sides respectively, the locking mechanism is able to be unlocked and the slider is driven to slide by operating the folding operating element such that the front support, the rear support and the seat rod get close and are folded. To achieve a "lift to fold" effect, it just needs to pull the folding operating element to unlock the stroller frame and drive the whole stroller frame to fold.

According to the present invention, the locking mechanism is not particularly limited. However, the locking mechanism is preferably provided between the slider and the component slidably provided with the slider.

Further, the locking mechanism comprises a locking element slidably provided on the slider, and a cooperating element provided on the component slidably provided with the slider and cooperating with the locking element to lock, the unlocking element is driven by the folding operating element to drive the locking element to slide and so as to match up with or separate from the cooperating element.

Further, the cooperating element may be for example a locking hole or a locking slot, etc.

Further, the unlocking element is rotatably provided on the slider, and the unlocking element and the locking element are rotatably connected. When the unlocking element rotates relative to the slider, the locking element is driven to slide, and so as to match up with or separate from the cooperating element.

According to a specific aspect, the unlocking element is rotatably connected with the slider by a first pivot, and is rotatably connected with an end of the locking element by a second pivot, the first pivot and the second pivot being parallel, an end of the locking element opposite to said end being locked with the cooperating element. Preferably, the first pivot is more close to the rod piece slidably provided with the slider than the second pivot.

Further, a reset torsional spring is preferably provided between the slider and the unlocking element, and specifically, two end parts of the reset torsional may be connected to the slider and the unlocking element respectively, or sleeved over a rotating shaft between the slider and the unlocking element. Providing the reset torsional spring may cause the locking mechanism automatically to switch to the locked state from the unlock state, convenient for operation.

Preferably, the folding operating element is band-shaped.

Preferably, the slider is a sliding sleeve.

In a specific embodiment, the support frame comprises a bottom support frame comprising two bottom support rod cross-connected to each other and rotatably connected at the cross point, an end of the bottom support rod is rotatably connected to the front support on one side and the other end of the bottom support rod is rotatably connected to the rear support on the opposite side.

In a particular embodiment, the support frame comprises a rear support frame capable of closing up and being folded in the transverse direction, and the rear support frame is provided between the rear supports on two sides and comprises:
a longitudinal connecting rod;
a first support rod, an end of the first support rod being rotatably connected with an upper end of the longitudinal connecting rod, and the other end of the first support rod being rotatably connected to the rear support on one side;
a second support rod, an end of the second support rod being rotatably connected with the upper end of the longitudinal connecting rod and the first support rod, and the other end of the second support rod being rotatably connected to the rear support on the other side;
a third support rod, an end of the third support rod being rotatably connected with a lower end of the longitudinal connecting rod and the second support rod, and the other end of the third support rod being rotatably connected to the rear support on said one side;
a fourth support rod, an end of the fourth support rod being rotatably connected with the lower end of the longitudinal connecting rod, and the other end of the fourth support rod being rotatably connected to the rear support on the other side;
a connecting base, slidably provided on the longitudinal connecting rod along the length direction of the longitudinal connecting rod;
a first slanting rod, an end of the first slanting rod being rotatably connected to the connecting base, and the other end of the first slanting rod being rotatably connected to the third support rod;
a second slanting rod, an end of the second slanting rod being rotatably connected to the connecting base, and the other end of the second slanting rod being rotatably connected to the fourth support rod;
when the first support rod and the second support rod are unfolded to extend along the horizontal direction, the connecting base is blocked. Further, a pedal is provided at the connection joint of the longitudinal connecting rod, the third support rod and the fourth support rod.

Preferably, the stroller frame further comprises a backrest assembly, and the backrest assembly comprises two backrest rods on the two sides, and a connecting rod group provided between the two backrest rods and capable of being folded in the transverse direction, lower ends of the backrest rods being rotatably connected to the seat rod.

More preferably, the connecting rod group comprises two slanting support rods cross-connected to each other, a lower end of the slanting support rod being rotatably connected to the lower end of the backrest rod on one side, an upper end of the slanting support rods being rotatably connected to an end of a transverse support rod, the other end of the transverse support rod being rotatably connected to an upper end of the backrest rod on the other side.

In a specific embodiment, an upper part of the front support is fixedly provided with a push handle, and the push handle and the front support form one rod piece.

In another specific embodiment, the push handle and the front support maybe two rods fixedly connected, the two rods being coaxial and having the same diameter.

Further, the upper end part of the rear support is connected with the front support, and the front end part and the rear end part of the seat rod are connected with the front support and the rear support respectively, when the stroller frame is in the unfolded state, the connection joint of the front support and the rear support is above the connection joint of the seat pose and the front support as well as the connection joint of the seat pose and the rear support.

According to a specific and preferable aspect, the rear support and the front support are connected via the slider, and the slider is slidably provided on the front support, and is rotatably connected with the rear support via a pivot. More preferably, when folded, the slider slides upwards along the front support.

According to another specific aspect, the seat rod and the rear support or the front support are connected via the slider, and the slider is slidably provided on the rear support or the front support, and is rotatably connected with the seat rod via a pivot.

According to a specific aspect of the present invention, the seat of the stroller is formed by sleeving a cloth cover over the seat rod. The cloth cover has a first part and a second part, the first part being sleeved over the seat rod to form a seat plate, and an upper part of the second part and the front supports at the two sides are connected to form a backrest.

According to the embodiments of the present invention, each two rotatably connected components are all preferably pivotally connected.

Due to the use of the above technical schemes, the present invention has the following advantages over the prior art: In the baby stroller of the present invention, the front support, the rear support and the seat rod form a stable triangle structure so as that the stroller frame is in a stable unfolded state; when compared with the conventional stroller structure, this stroller frame has a better rigidity and would not be folded inwardly after carrying a heavy load, and meanwhile, the front supports may play the roles of the front support and the push rod, and stroller has a fewer rod pieces, has a more simple structure, and sharply decreases the production cost than the conventional strollers.

### BRIEF DESCRIPTION OF THE DRAWINGS

Figure 1 is a three-dimensional schematic view of a folding stroller (in the unfolded state) of Embodiment 1;
Figure 2 is a schematic side view of Figure 1;
Figure 3 is another three-dimensional schematic view of the stroller (in the unfolded state) of Embodiment 1;
Figure 4 is a three-dimensional schematic view of the stroller (during folding) of Figure 1;
Figure 5 is a three-dimensional schematic view of the stroller (in the folded state) of Figure 1;
Figure 6 is a structure schematic view of the Embodiment 1 of Figure 1 when the slider is in the locked state;
Figure 7 is a structure schematic view of the Embodiment 1 of Figure 1 when the slider is in the unlocked state;
Figure 8 is a structure abbreviated diagram of a folding stroller (in the unfolded state) of Embodiment 2;
Figure 9 is a structure abbreviated diagram of the folding stroller (during folding) of Embodiment 2;
Figure 10 is a structure abbreviated diagram of the folding stroller (in the folded state) of Embodiment 2;
Figure 11 is a structure abbreviated diagram of a folding stroller (in the unfolded state) of Embodiment 3;
Figure 12 is a structure abbreviated diagram of the folding stroller (during folding) of Embodiment 3;
Figure 13 is a structure abbreviated diagram of the folding stroller (in the folded state) of Embodiment 3;
Figure 14 is an overall structure schematic view of a baby stroller in unfolded state according to Embodiment 4 of the present invention;
Figure 15 is an exploded structure view of the baby stroller according to Embodiment 4;
Figure 16 is a overall structure schematic view of the baby stroller in half-folded state as shown in Figure 14;
Figure 17 is a overall structure schematic view of the baby stroller in folded state as shown in Figure 14;
Wherein, 20 - front wheel assembly; 30 - rear wheel assembly; 31 - first part; 32 - second part; 10 - side support; 1 - front support; 40a - lock hole; 2 - rear support; 3 - seat rod; 8 - push handle; 69 - pedal; 4 - slider; 41 - locking element; 42 - unlocking element; 9 - folding operating element; 5 - bottom support frame; 51 - bottom support rod; 6 - rear support frame; 65 - longitudinal connecting rod; 66 - connecting base; 67 - first slanting rod; 68 - second slanting rod; 61 - first support rod; 62 - second support rod; 63 - third support rod; 64 - fourth support rod; a - first pivot; b - second pivot.

### DETAILED DESCRIPTION OF EXEMPLARY EMBODIMENTS

### Embodiment 1

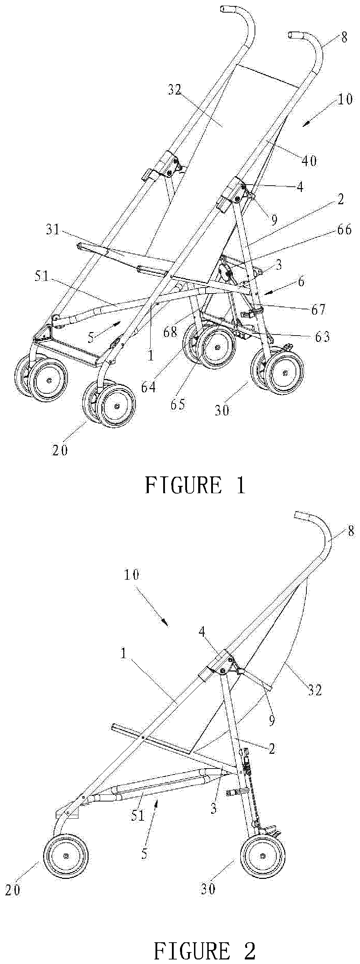

Reffering to Figures 1 -7, the present embodiment provides a folding stroller, comprising a stroller frame with a unfolded state and a folded state, a front wheel assembly 20 and a rear wheel assembly 30. The stroller frame specifically comprises side supports 10 at two sides and symmetric, and a support frame provided between the side supports 10 on the two sides and capable of closing up and being folded in a transverse direction.

Further, the side support 10 comprises a front support 1 formed by one rod piece and provided with a front wheel assembly 20 at the bottom, a rear support 2 provided with a rear wheel assembly 30, a seat rod 3 extending along a front-rear direction, and a push handle 8 provided on an upper end part of the front support 1. The front support 1, the rear support 2 and the seat rod 3 are connected with one another to form a triangular three-link mechanism. In the shown embodiment, in particular, the front support 1 and the rear support 2 are connected by means of a slider 4. An upper end part of the rear support 2 and the slider 4 is rotatably connected by means of a pivot. Further, the front end part and the rear end part of the seat rod 3 are respectively rotatably connected with a lower part of the front support 1 and a middle-lower part of the rear support 2 via pivots, and when the stroller frame is in the unfolded state, the connection joint of the front support 1 and the rear support 2 is above the connection joint of the seat pose 3 and the front support 1 as well as the connection joint of the seat pose 3 and the rear support 2.

The stroller further comprises a locking mechanism for locking the slider 4 and the front support 1 together, an unlocking element 42 provided on the slider 4 for unlocking the locking mechanism, and a folding operating element 9 connected with the unlocking element 42. In particular, the folding operating element 9 is band-shaped, and two ends thereof are connected with the unlocking elements 42 on the two sides, respectively. The slider 4 specifically is a sliding sleeve sleeved over the front support 1. When folding the stroller, pulling the folding operating element 9 upwards may drive the unlocking element 42 to unlock the locking mechanism and drive the slider 4 to slide upwards along the front support 1, and cause the front support 1, the rear support 2 and the seat rod 3 to fold and get close.

Further, the support frame comprises a bottom support frame 5 provided between the front support 1 and the rear support 2 and capable of closing up and being folded in the transverse direction, and a rear support frame 6 provided between two rear supports 2 on the two sides and capable of closing up and being folded in the transverse direction.

In this embodiment, the bottom support frame 5 comprises a pair of bottom support rods 51 cross-connected to each other and rotatably connected at the cross point, front end parts of the bottom support rods 51 are rotatably connected to the front supports 1 on two sides respectively, and rear end parts are rotatably connected to the rear supports 2 on two side.

In this embodiment, the rear support frame 6 comprises a longitudinal connecting rod 65, a connecting base 66 slidably provided on the longitudinal connecting rod 65, an upper transverse support rod, a lower transverse support rod below the upper transverse support rod, a first slanting rod 67 and a second slanting rod 68; the upper transverse support rod comprises a first support rod 61 and a second support rod 62 outer end parts of which are rotatably connected with the rear supports 2 on two sides and inner ends of which are rotatably connected with an upper end part of the longitudinal connecting rod 65; the lower transverse support rod comprises a third support rod 63 and a fourth support rod 64 outer end parts of which are rotatably connected with the rear supports 2 on two sides and inner ends of which are rotatably connected with a lower end part of the longitudinal connecting rod 65; upper end parts of the first slanting rod 67 and the second slanting rod 68 are rotatably connected to two opposite sides of the connecting base 66 respectively, and lower end parts of the first slanting rod 67 and the second slanting rod 68 are rotatably connected to the outer end parts of the third support rod 63 and the fourth support rod 64 respectively. A pedal 69 is provided at the connection joint of the longitudinal connecting rod 65, the third support rod 63 and the fourth support rod 64.

When the connecting base 66 slides to the upper end of the longitudinal connecting rod 65, the first support rod 61 and the second support rod 62 are unfolded to extend basically along the horizontal direction and to block the connecting base 66, the third support rod 63, the longitudinal connecting rod 65 and the first slanting rod 67 form a triangle, and the fourth support rod 64, the longitudinal connecting rod 65 and the second slanting rod 68 form another triangle, the third support rod 63 and the fourth support rod 64 extend in the same line, and the rear support frame 6 is locked to an open state for keeping the distance between the side supports 10 on the left and right sides of the stroller frame fixed; when the third support rod 63 and the fourth support rod 64 rotate relative to each other, the connecting base 66 slides downwardly along the longitudinal connecting rod 65, the first slanting rod 67 and the second slanting rod 68 rotate correspondingly, and then get close to the third support rod 63, the fourth support rod 64 and the longitudinal connecting rod 65 gradually, the rear support frame 6 closes up and is folded gradually, and the side supports 10 on two sides close up gradually. The locking mechanism for locking the stroller frame may also lock the rear support frame 6.

In this embodiment, the seat of the stroller is formed by sleeving a cloth cover over the seat rod 3. The cloth cover has a first part 31 and a second part 32. The first part 31 is sleeved over the seat rod 3 to form a seat plate, and an upper part of the second part 32 and the front supports 1 on the two sides are connected to form a backrest.

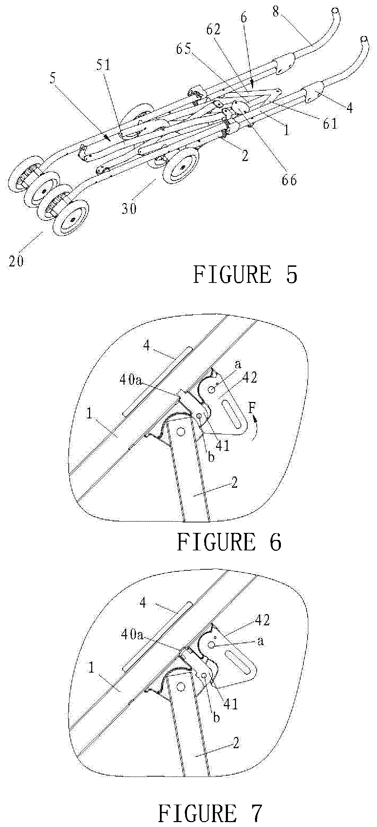

The locking mechanism is not particularly limited, and may employ those common implementations in the art. Specifically in this embodiment, the locking mechanism is preferably provided between the slider 4 and the front support 1. In particular, see Figure 6 and Figure 7, the locking mechanism comprises a locking element 41 slidably provided on the slider 4, and a locking hole 40a or a locking slot or other cooperating element provided on the front support 1 and cooperating with the locking element 41 to lock, when the locking element 41 is inserted into the locking hole 40a, the locking mechanism is locked, and the slider 4 is locked and cannot slide, and when the locking element 41 separates from the locking hole 40a, the locking mechanism is unlocked, and the slider 4 can slide. The unlocking element 42 are rotatably connected with the slider 4 and the locking element 41 via a first pivot a and a second pivot b parallel to each other, respectively, wherein the first pivot a is closer to the front support 1 than the second pivot b. When the unlocking element 42 rotates around the first pivot a as axis, and can drive the locking element 41 to slide and match up with or separate from the locking hole 40a. When rotating along direction F as shown in Figure 6, the locking element 41 is driven by the unlocking element 42 to slide toward a direction facing away from the locking hole 40a so as to separate from the locking hole 40a and achieve unlocking, conversely, when rotating along a direction opposite to direction F, the locking element 41 is driven by the unlocking element 42 to slide toward a direction close to the locking hole 40a so as to insert the locking element 41 into the locking hole 40a and achieve locking. In addition, a reset torsional spring is provided between the slider 4 and the unlocking element 42, and two end parts of the reset torsional spring are connected with the slider 4 and the unlocking element 42, respectively. Under the action of the reset torsional spring, the locking mechanism may automatically switch to the locked state from the unlock state. The unlocking elements 42 on two sides are connected via the folding operating element 9, and by lifting and folding the folding operating element 9, the unlocking elements 42 rotate around the first pivot a as axis along direction F, and can drive the locking element 41 to slide out from the locking hole 40a, such that the two sides are unlocked at the same time, and then the slider 4 is driven to slide. The locking mechanism and the unlocking element 42 of this embodiment not only have simple structures, but also are convenient for operating.

Without specific explanation, the rotatable connections between the above two components are all rotatable connections by means of a pivot.

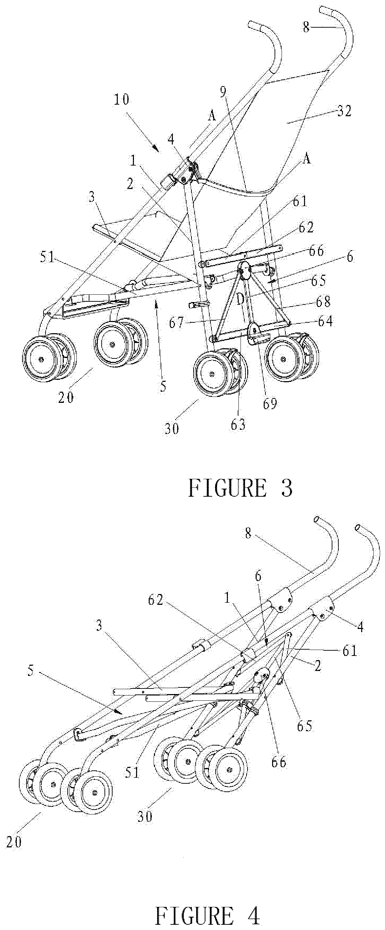

The folding process of the baby stroller of this embodiment is as follow: see Figure 3, firstly the rear support frame 6 is unlocked along an upward direction i.e. direction D, then the folding operating element 9 is lifted to move upward to unlock the slider 4, and then the slider 4 slides along direction A (a direction along the front support 1 and upward) and drives the rear support 2 and the seat rod 3 to rotate relative to the front support 1 and gradually get close to the front support 1, and the rear support frame 6 closes up along a left-right direction and drives the bottom support frame 5 to close up along the left-right direction, as shown in Figure 4, and finally, the stroller is folded to form a state as shown in Figure 5.

Above all, the stroller of this embodiment has the following advantages over the existing stroller: very convenient for folding, just lift to fold, more simple structure, more convenient arrangement, well rigidity of the whole stroller, and would not be folded inwardly after carrying a heavy load.

### Embodiment 2

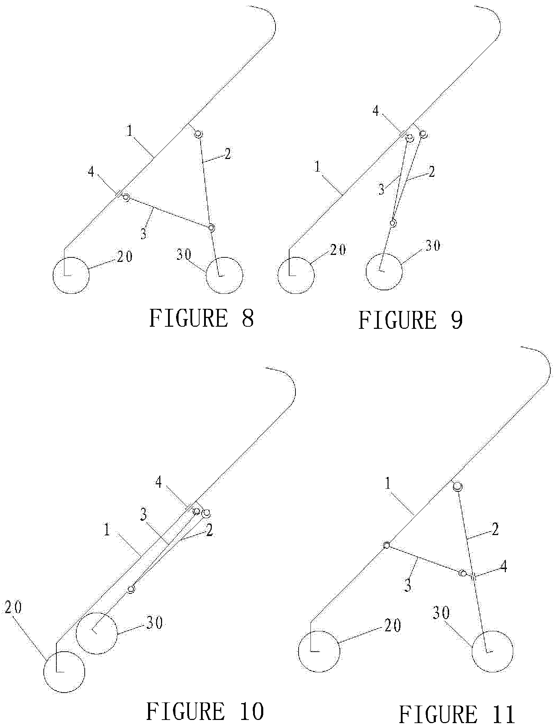

The present embodiment provides a folding stroller, see Figures 8 - 10, which is basically the same with Embodiment 1 by differing in that, the front end part of the seat rod 3 is connected with the lower part of the front support 1 via the slider 4, the seat rod 3 and the rear support 2 as well as the front support 1 and the rear support 2 are rotatably connected via pivots, respectively. The slider 4 can slide along the extending direction of the front support 1, and is rotatably connected with the seat rod 3 via a pivot.

When folding the baby stroller of this embodiment, after the rear support frame is unlocking, the folding operating element is lifted to unlock the locking mechanism, and then, the slider 4 is pulled to slide upwardly along the front support 1 and drive the seat rod 3 to rotate relative to the rear support 2 and gradually get close to the rear support 2, and meanwhile, the rear support 2 is driven to rotate relative to the front support 1 and gradually get close to the front support 1, the rear support frame closes up along the left-right direction gradually and drives the bottom support frame to close up along the left-right direction, and finally, the stroller is folded to form a state as shown in Figure 10. The stroller of this embodiment also has a "lift to fold" effect.

### Embodiment 3

The present embodiment provides a folding stroller, see Figures 11 - 13, which is basically the same with Embodiment 1 by differing in that, the rear end part of the seat rod 3 is connected with the rear support 2 via the slider 4, the seat rod 3 and the rear support 1 as well as the front support 1 and the rear support 2 are rotatably connected via pivots, respectively. The slider 4 can slide along the extending direction of the rear support 2, and is rotatably connected with the seat rod 3 via a pivot. A locking mechanism is provided between the slider 4 and the rear support 2 to lock them together, and the structure and the principle of this locking mechanism is as the same in Embodiment 1.

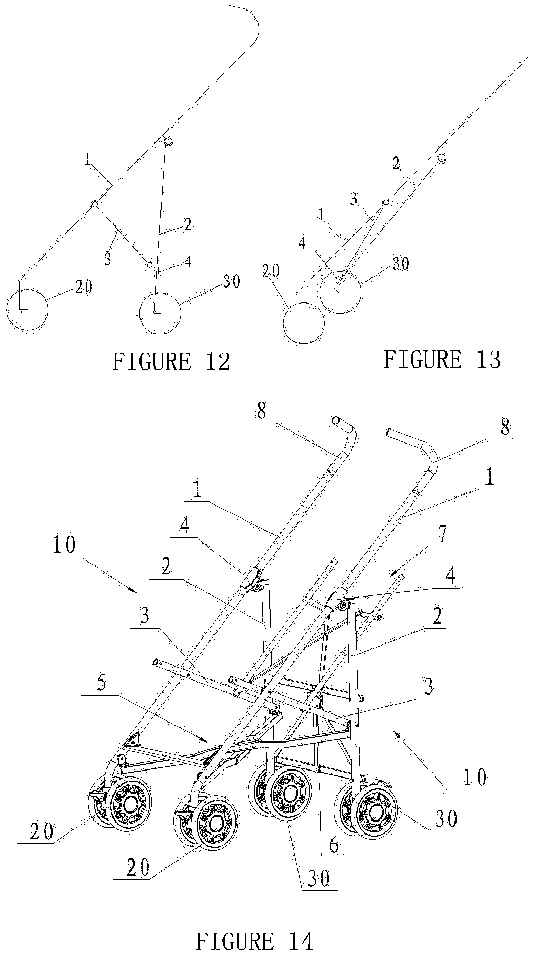

When folding the baby stroller of this embodiment, after the rear support frame is unlocked, the folding operating element is lifted to drive the unlocking element and unlock the locking mechanism, and then, the slider 4 is pulled to slide downwardly along the rear support 2, and drive the rear support 2 and the seat rod 3 to rotate relative to the front support 1 and gradually get close to the front support 1, the bottom support frame closes up along the left-right direction gradually, and finally, the stroller is folded to form a state as shown in Figure 13. The stroller of this embodiment also has a "lift to fold" effect.

### Embodiment 4

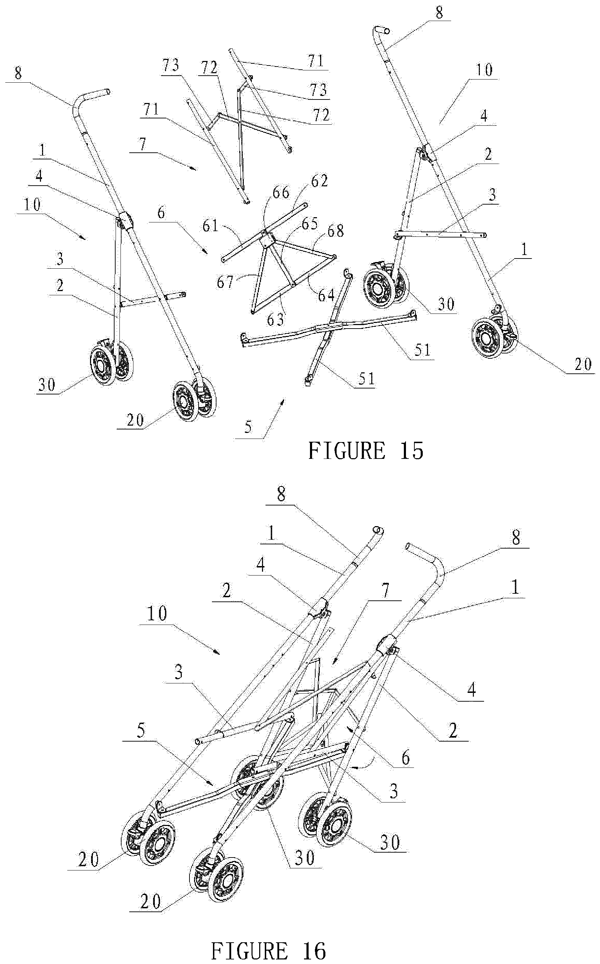

The stroller of the present invention is as shown in Figures 14 - 17, the structure thereof is similar to that of the stroller of Embodiment 1 by differing in that, the stroller of the present invention cancels the folding operating element, and a backrest assembly 7 is added to the stroller frame. As shown in Figure 15, the backrest assembly 7 comprises two backrest rods 71 on the two sides, and a connecting rod group provided between the two backrest rods 71 and capable of being folded in the transverse direction, the two backrest rods 71 are parallel to each other, and lower end parts of the backrest rods 71 are rotatably connected to the seat rod 3. The connecting rod group comprises two slanting support rods 72 cross-connected to each other, a lower end of the slanting support rod 72 is rotatably connected to a lower end of the backrest rod 71 on one side, an upper end of the slanting support rod 72 is rotatably connected to an end of a transverse support rod 73, and the other end of the transverse support rod 73 is rotatably connected to an upper end of the backrest rod 71 on the other side. When the stroller frame closes up along the left-right direction, the above-mentioned connecting rod group closes up and folds accordingly so as to close up and fold the backrest rod 71 in the transverse direction.

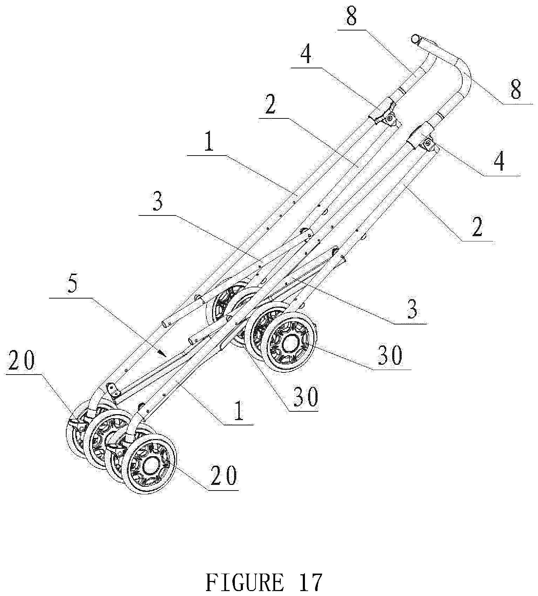

When the stroller frame in the present invention is unfolded, as shown in Figure 14, the bottom support frame 5 and the rear support frame 6 is unfolded to extend the side supports 10 on two sides, and on the side support 10 of each side, the front support 1, the rear support 2 and the seat rod 3 form a stable triangle structure, and the side support is in a stable unfolded state. When the stroller frame is required to be folded, firstly the locking mechanism is unlocked, that is, the rear support frame 6 is unlocked, the slider 4 and the front support 1 are unlocked, the slider 4 slides along the front support 1 upward and drives the rear support 2 and the seat rod 3 to rotate relative to the front support 1 and gradually get close to the front support 1, and the rear support frame 6 closes up along the left-right direction and drives the bottom support frame 5 to close up along the transverse direction, and the backrest assembly 7 also closes up and folds along the transverse direction gradually, as shown in Figure 16, and finally, the stroller is folded to form a state as shown in Figure 17, and the folded structure is compact and occupies less space. When the stroller frame is required to be unfolded, it just needs to push the push handle 8, kick the rear wheel 30 to rotate the rear support 2 rearward relative to the front support 1, and drive the slider 4 to slide along the front support 1 downward and drive the seat rod 3 to rotate until the slider 4 is locked to the front support 1, the front support 1, the rear support 2 and the seat rod 3 form a triangle structure, and the side support 10 is unfolded, meanwhile, the bottom support frame 5, the rear support frame 6 and the backrest assembly 7 stretch out along the left-right direction gradually until the rear support frame 6 is in the locking state, the side supports 10 on two sides are fixed relatively, and the stroller frame is in a stable unfolded state. Folding and stretching out the above-mentioned stroller frame is simple and convenient.

The embodiments described above illustrates the present invention in detail, and is intended to make those skilled in the art being able to understand the present invention and thereby implement it, and should not be concluded to limit the protective scope of this invention. Any equivalent variations or modifications according to the spirit of the present invention should be covered by the protective scope of the present invention.

## Claims

1. A folding stroller, comprising a stroller frame with a unfolded state and a folded state, a front wheel assembly and a rear wheel assembly, and a locking mechanism provided on the stroller frame and used for locking the stroller frame, the stroller frame comprising a front support at the bottom of which the front wheel assembly is provided, a rear support at the bottom of which the rear wheel assembly is provided, and a seat rod extending along a front-rear direction, **characterized in that**,
the front support, the rear support and the seat rod are connected with one another to form a triangular three-link mechanism, and in the three connection relationships among the three components, two are rotatable connection, and the rest one is relative slidable connection by means of a slider, the slider being slidably arranged in the length direction of one of the two slidably connected components and being in rotatable connection with the other component of the two slidably connected components.

2. The folding stroller according to claim 1, wherein the stroller frame comprises side supports on two sides, and the side support of each side comprises the front support, the rear support and the seat rod, respectively, and the stroller frame further comprises a support frame connected between the side supports on the two sides and capable of closing up and being folded in a transverse direction.

3. The folding stroller according to claim 2, wherein the locking mechanism is to lock the slider and the component slidably provided with the slider together, and unlocking elements are respectively provided on the sliders of the side supports on the two sides for unlocking the locking mechanism, two ends of a folding operating element are connected with the unlocking elements on the two sides respectively, the locking mechanism is able to be unlocked and the slider is driven to slide by operating the folding operating element such that the front support, the rear support and the seat rod get close and are folded.

4. The folding stroller according to claim 3, wherein the locking mechanism comprises a locking element slidably provided on the slider, and a cooperating element provided on the component slidably provided with the slider and cooperating with the locking element to lock, the unlocking element is driven by the folding operating element to match up or separate the locking element and the cooperating element.

5. The folding stroller according to claim 4, wherein the cooperating element is a locking hole or a locking slot.

6. The folding stroller according to claim 4, wherein the unlocking element is rotatably provided on the slider, and the unlocking element and the locking element are rotatably connected.

7. The folding stroller according to claim 6, wherein the unlocking element is rotatably connected with the slider by a first pivot, and is rotatably connected with an end of the locking element by a second pivot, the first pivot and the second pivot being parallel, an end of the locking element opposite to said end being locked with the cooperating element.

8. The folding stroller according to claim 3, wherein the folding operating element is band-shaped.

9. The folding stroller according to claim 1, wherein the slider is a sliding sleeve.

10. The folding stroller according to claim 2, wherein the support frame comprises a bottom support frame comprising two bottom support rods cross-connected to each other and rotatably connected at the cross point, an end of the bottom support rod is rotatably connected to the front support on one side and the other end of the bottom support rod is rotatably connected to the rear support on the opposite side.

11. The folding stroller according to claim 2, wherein the support frame comprises a rear support frame capable of closing up and being folded in the transverse direction, and the rear support frame is provided between the rear supports on two sides and comprises
a longitudinal connecting rod;
a first support rod, an end of the first support rod being rotatably connected with an upper end of the longitudinal connecting rod, and the other end of the first support rod being rotatably connected to the rear support on one side;
a second support rod, an end of the second support rod being rotatably connected with the upper end of the longitudinal connecting rod and the first support rod, and the other end of the second support rod being rotatably connected to the rear support on the other side;
a third support rod, an end of the third support rod being rotatably connected with a lower end of the longitudinal connecting rod and the second support rod, and the other end of the third support rod being rotatably connected to the rear support on said one side;
a fourth support rod, an end of the fourth support rod being rotatably connected with the lower end of the longitudinal connecting rod, and the other end of the fourth support rod being rotatably connected to the rear support on the other side;
a connecting base, slidably provided on the longitudinal connecting rod along the length direction of the longitudinal connecting rod;
a first slanting rod, an end of the first slanting rod being rotatably connected to the connecting base, and the other end of the first slanting rod being rotatably connected to the third support rod;
a second slanting rod, an end of the second slanting rod being rotatably connected to the connecting base, and the other end of the second slanting rod being rotatably connected to the fourth support rod;
when the first support rod and the second support rod are unfolded to extend along the horizontal direction, the connecting base is blocked.

12. The folding stroller according to claim 1, wherein the stroller frame further comprises a backrest assembly, the backrest assembly comprising two backrest rods on the two sides and a connecting rod group provided between the two backrest rods and capable of being folded in the transverse direction, lower ends of the backrest rods being rotatably connected to the seat rod.

13. The folding stroller according to claim 12, wherein the connecting rod group comprises two slanting support rods cross-connected to each other, the lower end of the slanting support rod being rotatably connected to a lower end of the backrest rod on one side, an upper end of the slanting support rod being rotatably connected to an end of a transverse support rod, the other end of the transverse support rod being rotatably connected to an upper end of the backrest rod on the other side.

14. The folding stroller according to claim 1, wherein an upper part of the front support is fixedly provided with a push handle, and the push handle and the front support form one rod piece.

15. The folding stroller according to claim 1, wherein an upper part of the front support is fixedly provided with a push handle, and the push handle and the front support are two rods fixedly connected, the two rods being coaxial and having the same diameter.

16. The folding stroller according to any one of claims 1 - 15, wherein, the upper end part of the rear support is connected with the front support, and the front end part and the rear end part of the seat rod are connected with the front support and the rear support respectively, when the stroller frame is in the unfolded state, the connection joint of the front support and the rear support is above the connection joint of the seat rod and the front support as well as the connection joint of the seat rod and the rear support.

17. The folding stroller according to claim 1, wherein the rear support and the front support are connected via the slider, and the slider is slidably provided on the front support, and is rotatably connected with the rear support.

18. The folding stroller according to claim 1, wherein the seat rod is slidably connected with the rear support or the front support via the slider, and the slider is slidably provided on the rear support or the front support, and is rotatably connected with the seat rod.
